# EUROPEAN PATENT SPECIFICATION

(11) **EP 1 780 977 B1**
(45) Date of publication and mention of the grant of the patent: **03.12.2008**
(21) Application number: 06122884.7
(22) Date of filing: 24.10.2006
(51) Int. Cl.: H04L 29/06

(54) **Method of route optimization with dual mobile node in IPV4-only network**
Verfahren zur Routen-Optimierung mit einem mobilen Doppelprotokollgerät in einem nur-IPv4 Netz
Procédé d'optimisation des routes avec un terminal mobile a double protocole dans un réseau uniquement IPv4

(30) Priority: 06.09.2006 KR 20060085890; 26.10.2005 IN CH15522005
(43) Date of publication of application: 02.05.2007
(73) Proprietor: Samsung Electronics Co., Ltd., Suwon-si, Gyeonggi-do 442-742 (KR)
(72) Inventor: Gurusamy, Lakshmi Praba Samsung India Software Pvt., Byrasandra, Bangalore 560093 Karnataka (IN); Wable, Ranjitsinh Udaysinh, Samsung India Soft. Oper. Pvt. Ltd, CV Raman Nagar,Byrasandra Bangalore 560093, Karnataka (IN); Mundra, Kishore Samsung India Software Operations Pvt.Ltd, CV Raman Nagar Byrasandra Bangalore 560093, Karnataka (IN); Madanapalli, Syam Samsung India Software Operations Pvt.Ltd, CV Raman Nagar, Byrasandra Bangalore 560093, Karnataka (IN)
(74) Representative: Brandon, Paul Laurence

(56) References cited:
- WO-A-20/06129136
- US-A1- 2005 008 032
- RAJEEV KOODLI NOKIA RESEARCH CENTER: "Mobile IPv4 Route Optimization Using Mobile IPv6 Return Routability" IETF STANDARD-WORKING-DRAFT, INTERNET ENGINEERING TASK FORCE, IETF, CH, 11 July 2005 (2005-07-11), XP015040607 ISSN: 0000-0004

## Description

The present invention relates to mobile communication, and more particularly, to a method of route optimization when a dual capable mobile IPv6 (MIPv6) mobile node is connected with an IPv4-only network.

Dual or dual capable mobile node, router, or the like indicate that these support both Internet Protocol version 6 (IPv6) and Internet Protocol version 4 (IPv4). An IPv4-only network refers to a network that provides or supports only an IPv4 service. Also, IPv6-in-IPv4 tunneling or IPv6-over-IPv4 tunneling refers to IPv4 tunneling which encapsulates an IPv6 packet using a header that uses an IPv4 address.

Route optimization (RO) allows packets to traverse a shorter route than a default route traversing a home agent (HA) by using bidirectional tunneling, and leads to better bandwidth utilization.

Currently, the route optimization (RO) is not available when a dual capable mobile IPv6 mobile node is connected with an IPv4-only network.

References directed to related arts are as follows.
Ryuji Wakikawa, Vijay Devarapalli, Carl E. Williams, "IPv4 Care-of Address Registration", draft-wakikawa-nemo-v4tunnel-01.txt
V.Devarapalli, R. Wakikawa, A. Petrescu, P. Thubert, "Network Mobility (NEMO) Basic Support Protocol", RFC 3963, January 2005.
D. Johnson, C. Perkins and J. Arkko, "Mobility Support in IPv6", RFC 3775, June 2004.
Deering S. and R. Hinden, "Internet Protocol, Version 6 (IPv6) Specification", RFC 2460, December 1998.

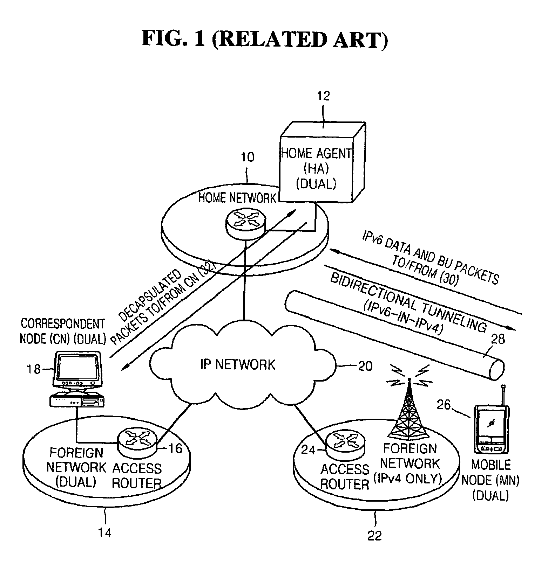

In FIG. 1, a related art communication path between a mobile node (MN) and a correspondent node (CN) is described, wherein the MN is connected with an IPv4-only network. Using existing solutions, communication between the mobile node (MN) 26 and the correspondent node (CN) 18 is only possible using bidirectional tunneling via a home agent (HA) 12.

When the MIPv6 capable dual MN 26 enters the IPv4-only network 22, the MN 26 obtains an IPv4 Address for itself from the IPv4-only network 22.

On not receiving any router advertisement (RA), MN 26 realizes that the network 22 is an IPv4-only network. MN 26 sends a binding update (BU) containing the obtained IPv4 address to its HA 12.

On receiving the IPv4 address of the MN 26 by the HA 12, a bidirectional tunnel 28 is established between the HA 12 and the MN 26 in the IPv4-only network 22.

All packets 30 to and from the MN 26 go via the established bidirectional tunnel 28.

However there are the following limitations to the above.
1. All packets 30 to and from MN 26 traverse via the bidirectional tunnel 28 between HA 12 and MN 26. Accordingly, overhead is added to the HA 12.
2. If the HA 12 does not support the bidirectional tunnel 28 (IPv6-over-IPv4 tunneling), the MN 26 cannot communicate with any of the CNs such as CN 18.

RAJEEV KOODLI NOKIA RESEARCH CENTER "Mobile lpv4 Route Optimization Using Mobile lpv6 Return Routability" IETF STANDARD-WORKING-DRAFT, INTERNET ENGINEERING TASK FORCE, IETF, CH, 11 July 2005 (2005-07-11) XP015040607 ISSN: 0000-0004 discloses a method of route optimization according to the pre-characterising portion of claim 1.

Preferred embodiments of the present invention aim to provide a method of route optimization (RO) in which direct packet delivery is possible between a mobile node (MN) and a correspondent node (CN) so as to avoid a bidirectional tunnel path via a home agent (HA), when a dual capable mobile IPv6 node moves to an IPv4-only network.

Preferred embodiments of the present invention also aim to provide a computer readable recording medium having recorded thereon a program for executing the method of RO described above.

According to an aspect of the present invention, there is provided a method of route optimization between a dual mobile node (MN) capable of both Internet Protocol version (IPv) 4 and IPv6, a correspondent node (CN), and a home agent (HA), when the MN is in an IPv4-only network, the method characterised by: exchanging IPv4 addresses through the HA (112); and communicating directly between the MN (126) and the CN (118) without the HA, wherein the exchanging of the IPv4 addresses includes the MN tunneling the MN's IPv4 address to the CN through the HA and requesting the CN's IPv4 address.

Further features of the present invention are set out in the appended claims.

Additional features of the invention will be set forth in part in the description which follows and, in part, will be obvious from the description, or may be learned by practice of the invention.

The present invention will become apparent and more readily appreciated from the following description of the aspects, taken in conjunction with the accompanying drawings of which:
FIG. 1 shows a related art communication path between a mobile node (MN) and a correspondent node (CN) when the MN is connected with an IPv4-only network.
FIG. 2 illustrates new message exchanges via a home agent (HA) and a subsequent direct delivery of data packets.
FIG. 3 illustrates message flow sequences of an aspect of the present invention when an MN is attached to an IPv4-only network.
FIG. 4A and 4B show Mobility Header type packet formats of messages according to aspects of the present invention.

Reference will now be made in detail to embodiments of the present invention, mainly methods of route optimization with dual mobile node in IPv4-only network, examples of which are illustrated in the accompanying drawings, wherein like reference numerals refer to the like elements throughout. The embodiments are described below in order to explain the present invention by referring to the figures.

When a mobile node (MN) gets connected or attached to an IPv4-only network, all the traffic to and from the MN should traverse via a bidirectional tunnel to a home agent (HA). Thus, overhead is added to the HA. Preferred embodiments of the present invention allow packets to and from the MN to go directly to a correspondent node (CN) using an IPv6-in-IPv4 tunnel. Accordingly, the MN must be dual capable.

In embodiments of the present invention, a direct packet delivery (Route Optimization) between an MN and CN avoids the bidirectional tunnel path via the HA, when a dual capable MIPv6 node moves or attaches to an IPv4-only network. Route optimization (RO) makes use of the IPv4 capability of a CN or a router that is linked with the CN (which can act on behalf of the CN) by forming IPv6-in-IPv4 tunnels. IPv6 packets originating from the MN are encapsulated/tunneled inside an IPv4 header and decapsulated by a CN/Router (on behalf of CN) on reception.

We assume that the MN, CN and HA are dual capable. Instead of the CN, any dual router connected with the CN can act on the CN's behalf. Similarly, instead of the HA, any dual router supporting the IPv6-over-IPv4 tunnel, which is present within a Home Administrative Domain of the Home Network, can act on behalf of the HA. In addition, the MN is expected to have an IPv4 address of the HA.

As discussed above, FIG. 1 shows packet exchanges between an MN 26 and an HA 12, and between the MN 26 and a CN 18 via the HA 12, when the MN 26 moves or connects to an IPv4-only network 22. FIG. 1 depicts handover of the MN 26, which is a dual capable node, from an IPv6 network (not shown) to the IPv4-only network 22.

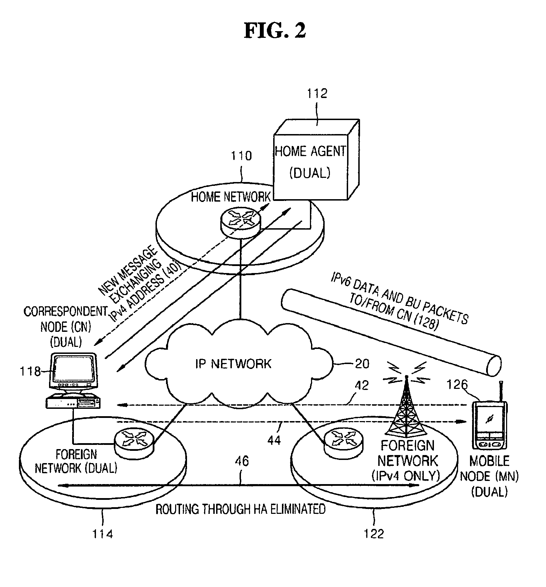

FIG. 2 shows new message exchanges 40, 42, and 44 between an MN 126 and a CN 118 via an HA 112 in order to achieve route optimization (RO). As shown in FIG. 2, an IPv4 address 40 is exchanged between the CN 118 and the MN 126 using a bidirectional tunnel 128 via the HA 112. Then, reachability test messages 42 and further data packets are sent directly from the MN 126 to the CN 118 using IPv6-in-IPv4 tunnel 46.

Once the MN 126 gets attached to an IPv4-only network122, the MN 126 gets a new IPv4 address. Then the MN 126 updates its HA 112 with the new IPv4 address. Thus, the HA 112 makes a binding entry for this MN 126 with the received new IPv4 address and from then on, tunnels the data packets received for the MN's (126) home address to MN's (126) new IPv4 address. The MN 126 updates the CN 118, via the HA 112 about MN's new IPv4 address. Thus, the CN 118 updates its binding entry. This communication is similar to that shown in FIG. 1 using a pipe (tunnel) 28 and lines 32.

After updating the HA 112, the MN 126 sends out a new message (such as 40) to the CN 112 giving the MN's (126) new IPv4 address and requesting the CN's (118) IPv4 address (if the CN is dual capable), via the HA 112. The packet containing the MN's (126) new IPv4 address is an IPv6-in-IPv4 tunnel packet. The HA 112 detunnels (or decapsulates) the IPv6-in-IPv4 tunnel packet and forwards an inner packet (IPv6 packet) to the CN 118. Then the CN 118 replies back with an IPv4 address of the CN 118 (if it is dual capable) to the MN's (126) home address (e.g., the MN's (126) IPv6 address). The reply of the CN 118 is then tunneled by the HA 112 to the MN's (126) new IPv4 address.

Once the MN 126 knows the CN's IPv4 address, the MN 126 does an address reachability test (42) for direct delivery of packets. After getting the reply for the address reachability test (44) from the CN 118, the MN 126 starts sending data packets directly to the CN using IPv6-in-IPv4 tunnels (46).. Finally, routing through the HA 112 is eliminated when data packet communication is sent via direct line 46 between the MN 126 and CN 118.

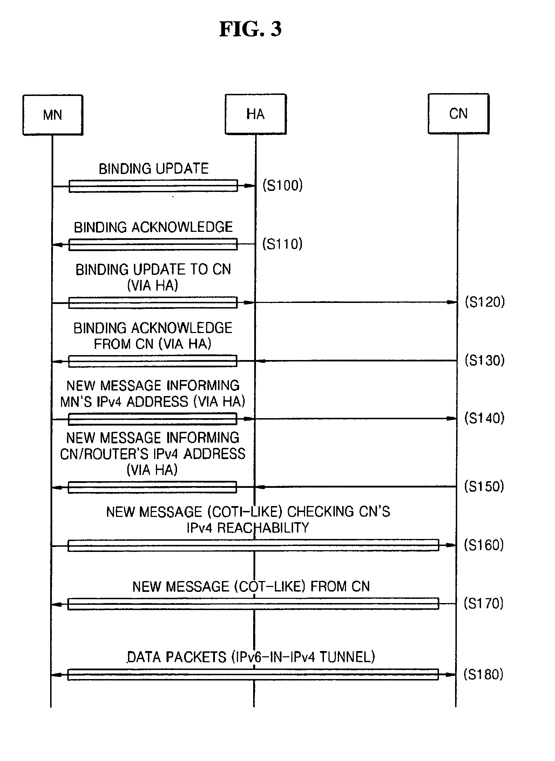

FIG. 3 shows message flow sequence according to an embodiment of the present invention when the MN 126 is attached to the IPv4-only network 122. Specifically, FIG. 3 shows the flow of messages between the MN 126, HA 112 and CN 118. FIG. 3 depicts tunneled and decapsulated packets differently. FIG. 3 shows the message flow sequence after the MN 126 gets attached to a foreign network, such as the IPv4-only network 122, and after the MN 126 receives the new IPv4 address. Lines covered with a box denote IPv6-in-IPv4 tunnel packets.

Direct lines without a box show packets that are not tunneled, mainly plain packets between the CN 118 and the HA 112 (e.g., packets in IPv6).

As shown in FIG. 3, the first two packet exchanges update the HA 112 with the MN's (126) move. The MN 126 tunnels a binding update to the HA 112 (operation S100). The HA 112 then tunnels a binding acknowledge to the MN 126 (operation S110).

Next two packet exchanges update the CN 118 with the MN's (126) move via the HA 112. The MN 126 tunnels the binding update (BU) to the HA 112, and then the HA 112 sends the binding update to the CN 118 (operation S120). The CN 118 then sends a binding acknowledge to the HA 112, and then the HA 112 tunnels the binding acknowledge to the MN 126 (operation S130).

Next two packet exchanges inform the MN's IPv4 address and request the CN 118 to give its IPv4 address via the HN 112. The MN 126 tunnels a new message informing the MN's (126) IPv4 address to the HA 112, and then the HA 112 sends the new message to the CN 118 (operation S140). The CN 118 then sends a new message informing CN/Router's IPv4 address to the HA 112, and then the HA 112 tunnels the new message to the MN 126 (operation S150).

Next two packet exchanges test reachability of the CN's (118) IPv4 address for direct delivery. The MN 126 tunnels a new message (COTI-like) checking CN's (118) IPv4 reachability directly to the CN 118 (operation S160). The CN 118 then tunnels a new message (COT-like) directly to the MN 126 (operation S170). Here, COTI stands for care-of test init and COT stands for care-of test.

Final bidirectional packet exchanges show how data packets are transmitted between the MN 126 and CN 118 (operation S180). As shown, the data packets (IPv6-in-IPv4) are tunneled between MN 126 and CN 118.

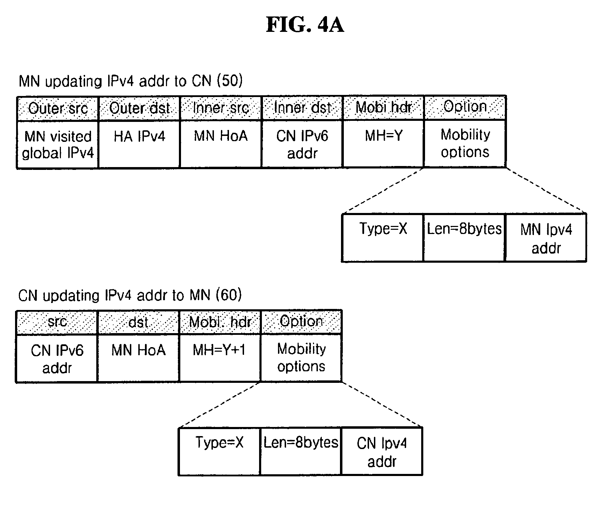

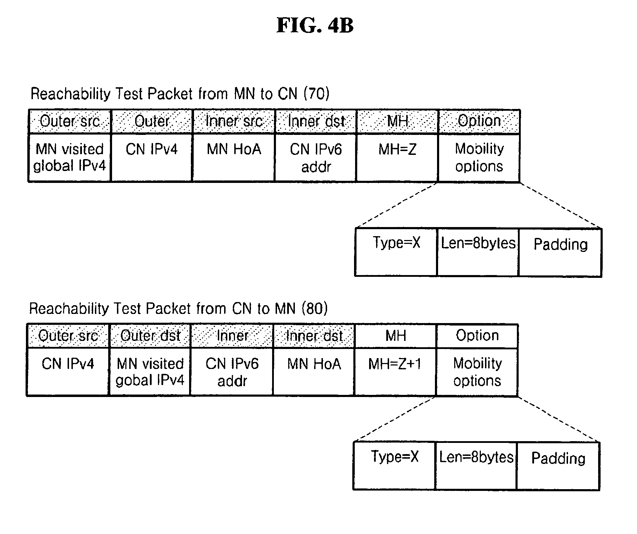

FIGS. 4A and 4B show mobility header type packet formats of messages according to aspects of the present invention. The packet formats are used when an MN moves to an IPv4-only network. FIGS. 4A and 4B show an implementation of a mobility header option. The mobility header option is a Type-Length-value option carrying an IPv4 address to and from the MN and CN. Accordingly, in FIGS. 4A and 4B, four mobility header options are defined.

As shown, first two packet formats shown in figure 4A denote a mobility header to inform the CN 118 about the MN's (126) IPv4 address and getting back a reply from the CN 118 with the CN's (118) IPv4 address. The formats are for exchanging IPv4 addresses from the MN 126 to the CN 118 and from the CN 118 to the MN 126.

The first of the two packet formats 50 (MN updating IPv4 address to CN) includes an outer source address (an MN visited global IPv4 address), an outer destination address (an HA IPv4 address), an inner source address (an IPv6 MN HoA), an inner destination address (a CN IPv6 address), a mobile header (MH=Y), and option (mobility options with type=X, length=8 bytes, and MN IPv4 address).

The second of the two packet formats 60 (CN updating IPv4 address to MN) includes a source address (a CN IPv6 address), a destination address (an IPv6 MN HoA), a mobile header (MH=Y+1), and an option (mobility options with type=X, length=8 bytes, and CN IPv4 address).

Next two packet formats shown in FIG. 4B denote a mobility header to test reachability of the IPv4 address of the CN 118. The formats are for use in a reachability test of the IPv4 addresses from the MN 126 to the CN 118 and from the CN 118 to the MN 126.

The first of the two packet formats 70 (reachability test packet from MN to CN) includes an outer source address (an MN visited global IPv4 address), an outer destination address (a CN IPv4 address), an inner source address (an IPv6 MN HoA), an inner destination address (a CN IPv6 address), a mobile header (MH=Z), and option (mobility options with type=X, length=8 bytes, and padding).

The second of the two packet formats 80 (reachability test packet from CN to MN) includes an outer source address (a CN IPv4 address), an outer destination address (an MN visited global IPv4 address), an inner source address (a CN IPv6 address), a destination address (an MN HoA), a mobile header (MH=Z+1), and an option (mobility options with type=X, length=8 bytes, and padding).

Operation of the invention using the above is as follows.
1. When a dual capable MN is connected to an IPv4-only network, the MN becomes configured using a visited IPv4 address (global) from a router it is connected with.
2. Updating the HA with the IPv4 address, wherein:
   (1) The MN sends a binding update (BU) to the HA, encapsulated in the IPv4 header.
   (2) Encapsulated BU packet details include the MN's Global visited IPv4 address as an outer source address, the HA's IPv4 address as an outer destination address, and a normal BU packet as an inner packet.
   (3) Upon receiving the encapsulated BU packet, HA removes a binding cache (if any) existing for the MN and stores the required tunneling parameters (i.e., MN's IPv4 address, etc.)
   (4) Then, the HA tunnels the encapsulated BU packet to and from the CN to the MN in the IPv4 packet and the MN tunnels the encapsulated BU packet destined to the CN using the HA's IPv4 address.
3. Deregistering BU with the CN (Via the HA):
   (1) The MN should deregister its previous binding update with the CN, by sending a normal BU to the CN encapsulated in the IPv4 packet (via the HA).
   (2) Encapsulated normal BU packet details include the MN's visited IPv4 address (global) as an outer source address, the HA's IPv4 address as an outer destination address, the MN's IPv6 Home Address (HoA) as an inner source address, the CN's IPv6 address as an inner destination address, and the normal BU.
   (3) Upon receiving this encapsulated normal BU packet, the CN removes the packet's binding cache for the MN and starts communicating with the MN using the MN's HoA.
4. Updating the CN with the IPv4 address:
   (1) The MN sends a packet to the CN via the HA, including the MN's IPv4 address and requests the CN's IPv4 address.
   (2) The CN stores the MN's IPv4 address so that the MN's IPv4 address may be used for data packet tunneling.
   (3) The CN replies with its IPv4 address (if it is dual capable) or with an address of a router which is dual and linked with the CN.
5. Checking reachability of the CN through its IPv4 address:
   (1) The MN sends a direct v6-in-v4 packet destined to the CN (Care-of Test Init (COTI like)).
   (2) Upon receiving this packet, the CN sends a response packet directly to the MN (Care-of Test (COT like)).
6. IPv6 data packets
   (1) Once the reachability is verified, the MN starts sending data packets to the CN tunneled in the IPv4 packet.
   (2) Similarly, the CN sends data packets tunneled directly to MN's IPv4 address.

Embodiments of the present invention can also be embodied as computer (including any device that has an information processing function) readable codes on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, and optical data storage devices.

In the method of RO according to preferred embodiments of the present invention, data packet delivery between the MN and the CN is performed directly through the IPv4 tunnel without traversing the HA. Accordingly, delivery delay can be avoided and overhead of the HA can be reduced, thereby increasing delivery efficiency and bandwidth.

Although a few aspects of the present invention have been shown and described, it would be appreciated by those skilled in the art that changes may be made in the aspects without departing from the principles of the invention, the scope of which is defined in the claims.

## Claims

1. A method of route optimization between a dual mobile node MN, (126) capable of both Internet Protocol version IPv4 and IPv6, a correspondent node, CN(118), and a home agent, HA, (112) of the MN when the MN (126) is in an IPv4-only network,
the method **characterised by**:
exchanging IPv4 addresses through the HA (112); and
communicating directly between the MN (126) and the CN (118) without the HA, (112), using an IPv6-in-IPv4 tunnel,
wherein the exchanging of the IPv4 addresses includes the MN (126), tunnelling the MN's IPv4 address to the CN (118) through the HA (112) and requesting the CN's IPv4 address.

2. The method of claim 1, wherein the method further comprises
updating a home agent (HA) (112) with an IPv4 address of the MN and deregistering a previous Binding Update BU, with a correspondent node (CN) (118) via the HA.

3. The method of claim 1 or 2, wherein communicating directly between the MN and the CN without the HA comprises
checking reachability of the CN by the CN's IPv4 address using an IPv6-in-IPv4 tunnel; and
sending and receiving an IPv6 data packet to/from the MN and the CN using the IPv6-in-IPv4 tunnel.

4. The method of claim any one of claims 2 or 3, wherein updating of the HA comprises the MN sending a BU packet to the HA, encapsulated in an IPv4 header.

5. The method of claim 4, wherein the BU packet has the MN's global visited IPv4 address as an outer source, the HA's IPv4 address as an outer destination, and a normal BU as an inner packet.

6. The method of claim 4 or claim 5, wherein upon receiving the BU packet, the HA removes a binding cache, if any exists, for the MN and stores required tunneling parameters.

7. The method of any one of claims 4-6, wherein the HA tunnels the BU packet to and from the CN to the MN in an IPv4 packet and the MN tunnels all packets destined to the CN using the HA's IPv4 address.

8. The method of any one of claims 2-7, wherein deregistering the previous BU with the CN via the HA comprises the MN deregistering the previous BU with the CN by sending a normal BU to the CN encapsulated in an IPv4 packet via the HA.

9. The method of claim 8, wherein the IPv4 packet has the MN's visited v4 global address as an outer source address, the HA's IPv4 address as an outer destination address, the MN's IPv6 Home Address (HoA) as an inner source address, the CN's IPv6 address as an inner destination address, and a BU.

10. The method of claim 8 or claim 9, wherein upon receiving the IPv4 packet, the CN removes a binding cache thereof for the MN and starts communicating with the MN using the MN's Home Address (HoA).

11. The method of claim 1, wherein the CN stores the MN's IPv4 address that is to be used for data packet tunneling.

12. The method of claim 1 or claim 11, wherein the CN replies with the CN's IPv4 address if the CN is dual capable or has a router address which is dual and linked to the CN.

13. The method of claim 3, wherein the checking of the reachability of the CN comprises the MN sending a direct v6-in-v4 packet destined to the CN.

14. The method of claim 13, wherein in response to receiving the packet, the CN sends a response packet directly to the MN.

15. The method of claim 3, wherein the sending and receiving of the IPv6 data packet comprises the MN starting to send IPv6 data packet to the CN tunneled in the IPv4 packet once the reachability is verified.

16. The method of claim 15, wherein, in return, the CN sends an IPv6 data packet tunneled in an IPv4 packet directly to the MN's IPv4 address.

17. The method of claim 1, wherein the method further comprises
obtaining an IPv4 address of the MN and registering the IPv4 address of the MN in a home agent (HA);
receiving an IPv4 address of the CN from the CN; and
checking reachability of the CN using IPv4 tunneling which encapsulates an IPv6 packet into a header that uses the IPv4 addresses of the MN and the CN.

18. The method of claim 17, wherein the registering of the IPv4 address of the MN in the HA is performed using a binding update.

19. The method of claim 17 or claim 18, wherein the MN tunneling the MN's IPv4 address to the CN through the HA comprises sending an IPv4 tunneling packet, which has a visited global IPv4 address of the MN as an outer source address, an IPv4 address of the HA as an outer destination address, an IPv6 home address of the MN as an inner source address, an IPv6 address of the CN as an inner destination address, and the IPv4 address of the MN, to the HA.

20. The method of any one of claims 17-19, wherein the receiving of the IPv4 address of the CN from the CN is performed using the HA.

21. The method of any one of claims 17-20, wherein the receiving of the IPv4 address of the CN from the CN comprises receiving an IPv4 address of a router connected to the CN instead of the IPv4 address of the CN, when the CN does not support the IPv4 tunneling.

22. The method of any one of claims 17-21, wherein the checking of reachability of the CN comprises sending a packet, which has a visited global IPv4 address of the MN as an outer source address, the IPv4 address of the CN as an outer destination address, an IPv6 home address of the MN as an inner source address, an IPv6 address of the CN as an inner destination address, and a value showing that the packet is a reachability checking message to a mobility header, to the CN.

23. The method of claim 22, wherein the checking of reachability of the CN further comprises receiving a message packet, which has the IPv4 address of the CN as an outer source address, a visited global IPv4 address of the MN as an outer destination address, an IPv6 address of the CN as an inner source address, an IPv6 home address of the MN as an inner destination address, and a value showing that the message packet is a reachability informing message to a mobility header, from the CN.

24. A computer readable medium having a program recorded on it for a computer to execute a method of route optimization when the program is run at a dual MIPV6 node (MN) in an IPV4-only network of any one of claims 1-23.

## Patentansprüche

1. Verfahren zur Routenoptimierung zwischen einem Dual-Mobilknoten MN (126) mit der Fähigkeit für sowohl Internet-Protokoll-Version IPv4 als auch IPv6, einem Korrespondenzknoten CN (118) und einem Heimatagenten HA (112) des MN, wenn sich der MN (12b) in einem Nur-IPv4-Netz befindet, **gekennzeichnet durch**
Austauschen von IPv4-Adressen über den HA (112); und
Kommunizieren direkt zwischen dem MN (126) und dem CN (118) ohne den HA (112) unter Verwendung eines IPv6-in-IPv4-Tunnels, wobei das Austauschen der IPv4-Adressen Tunneln **durch** den MN (126) der IPv4-Adresse des MN zum CN (118) über den HA (112) und Anfordern der IPv4-Adresse des CN einschließt.

2. Verfahren nach Anspruch 1, wobei das Verfahren weiterhin umfaßt
Aktualisieren eines Heimatagenten (HA) (112) mit einer IPv4-Adresse des MN und Deregistrieren eines vorhergehenden Binding Update BU mit einem Korrespondenzknoten (CN) (118) über den HA.

3. Verfahren nach Anspruch 1 oder 2, wobei direktes Kommunizieren zwischen dem MN und dem CN ohne den HA umfaßt
Überprüfen der Erreichbarkeit des CN durch die IPv4-Adresse des CN unter Verwendung eines IPv6-in-IPv4-Tunnels und
Senden und Empfangen eines IPv6-Datenpakets zu/von dem MN und dem CN unter Verwendung des IPv6-in-IPv4-Tunnels.

4. Verfahren nach einem der Ansprüche 2 oder 3, wobei Aktualisieren des HA Senden eines BU-Pakets durch den MN zum HA verkapselt in einem IPv4-Kopfteil umfaßt.

5. Verfahren nach Anspruch 4, wobei das BU-Paket die globale besuchte IPv4-Adresse des MN als äußerer Ursprung, die IPv4-Adresse des HA als äußeres Ziel und ein normales BU als inneres Paket aufweist.

6. Verfahren nach Anspruch 4 oder Anspruch 5, wobei bei Empfang des BU-Pakets der HA einen verbindlichen Cache, sofern einer besteht, für den MN entfernt und die erforderlichen Tunnelparameter speichert.

7. Verfahren nach einem der Ansprüche 4-6, wobei vom HA das BU-Paket zu und von dem CN zum MN in einem IPv4-Paket getunnelt wird und vom MN alle für den CN bestimmten Pakete unter Verwendung der IPv4-Adresse des HA getunnelt werden.

8. Verfahren nach einem der Ansprüche 2-7, wobei Deregistrieren des vorhergehenden BU beim CN über den HA Deregistrieren durch den MN aller vorherigen BU beim CN durch Senden einer normalen BU zum CN verkapselt in einem IPv4-Paket über den HA umfaßt.

9. Verfahren nach Anspruch 8, wobei das IPv4-Paket die besuchte globale v4-Adresse des MN als äußere Ursprungsadresse, die IPv4-Adresse des HA als äußere Zieladresse, die IPv6-Heimatadresse (HoA) des MN als innere Ursprungsadresse, die IPv6-Adresse des CN als innere Zieladresse und eine BU aufweist.

10. Verfahren nach Anspruch 8 oder Anspruch 9, wobei bei Empfang des IPv4-Pakets vom CN ein verbindlicher Cache desselben für den MN entfernt wird und mit dem MN unter Verwendung der Heimatadresse des MN (HoA) zu kommunizieren begonnen wird.

11. Verfahren nach Anspruch 1, wobei vom CN die IPv4-Adresse des MN, die für Datenpakettunnel zu benutzen ist, gespeichert wird.

12. Verfahren nach Anspruch 1 oder Anspruch 11, wobei der CN mit der IPv4-Adresse des CN antwortet, wenn der CN Dual-Fähigkeit besitzt oder eine Routeradresse aufweist, die dual und mit dem CN verknüpft ist.

13. Verfahren nach Anspruch 3, wobei das Überprüfen der Erreichbarkeit des CN Senden eines direkten für den CN bestimmten v6-in-v4-Pakets durch den MN umfaßt.

14. Verfahren nach Anspruch 13, wobei der CN als Antwort auf den Empfang des Pakets ein Antwortpaket direkt zum MN sendet.

15. Verfahren nach Anspruch 3, wobei das Senden und Empfangen des IPv6-Datenpakets das Senden des IPv6-Datenpakets durch den MN zum CN getunnelt im IPv4-Paket umfaßt, sobald Erreichbarkeit bestätigt ist.

16. Verfahren nach Anspruch 15, wobei als Antwort vom CN ein in einem IPv4-Paket getunneltes IPv6-Datenpaket direkt zur IPv4-Adresse des MN gesendet wird.

17. Verfahren nach Anspruch 1, wobei das Verfahren weiterhin umfaßt
Erhalten einer IPv4-Adresse des MN und Registrieren der IPv4-Adresse des MN in einem Heimatagenten (HA);
Empfangen einer IPv4-Adresse des CN vom CN; und
Überprüfen der Erreichbarkeit des CN unter Verwendung von IPv4-Tunnelung, die ein IPv6-Paket in einem Kopfteil verkapselt, der die IPv4-Adressen des MN und des CN benutzt.

18. Verfahren nach Anspruch 17, wobei das Registrieren der IPv4-Adresse des MN in dem HA unter Verwendung einer verbindlichen Aktualisierung durchgeführt wird.

19. Verfahren nach Anspruch 17 oder Anspruch 18, wobei das Tunneln der IPv4-Adresse des MN zum CN durch den HA vom MN das Senden eines IPv4-Tunnelpakets, das eine besuchte globale IPv4-Adresse des MN als äußere Ursprungsadresse, eine IPv4-Adresse des HA als äußere Zieladresse, eine IPv6-Heimatadresse des MN als innere Ursprungsadresse, eine IPv6-Adresse des CN als innere Zieladresse und eine IPv4-Adresse des MN aufweist, zum HA umfaßt.

20. Verfahren nach einem der Ansprüche 17-19, wobei das Empfangen der IPv4-Adresse des CN vom CN unter Verwendung des HA durchgeführt wird.

21. Verfahren nach einem der Ansprüche 17-20, wobei das Empfangen der IPv4-Adresse des CN vom CN Empfangen einer IPv4-Adresse eines mit dem CN verbundenen Routers anstatt der IPv4-Adresse des CN umfaßt, wenn der CN nicht das IPv4-Tunneln unterstützt.

22. Verfahren nach einem der Ansprüche 17-21, wobei das Überprüfen der Erreichbarkeit des CN Senden eines Pakets, das eine besuchte globale IPv4-Adresse des MN als äußere Ursprungsadresse, die IPv4-Adresse des CN als äußere Zieladresse, eine IPv6-Heimatadresse des MN als innere Ursprungsadresse, eine IPv6-Adresse des CN als innere Zieladresse und einen Wert, der zeigt, daß das Paket eine Erreichbarkeitsüberprüfungsnachricht zu einem Mobilitätskopfteil ist, aufweist, zum CN umfaßt.

23. Verfahren nach Anspruch 22, wobei das Überprüfen von Erreichbarkeit des CN weiterhin Empfangen eines Nachrichtenpakets, das eine IPv4-Adresse des CN als äußere Ursprungsadresse, eine besuchte globale IPv4-Adresse des MN als äußere Zieladresse, eine IPv6-Adresse des CN als innere Ursprungsadresse, eine IPv6-Heimatadresse des MN als innere Zieladresse, und einen Wert, der zeigt, daß das Nachrichtenpaket eine Erreichbarkeitsinformationsnachricht zu einem Mobilitätskopfteil ist, aufweist, vom CN umfaßt.

24. Computerlesbares Medium mit einem darauf aufgezeichneten Programm für einen Computer zum Ausführen eines Verfahrens zur Routenoptimierung, wenn das Programm auf einem Dual-MIPV6-Knoten (MN) abläuft, in einem Nur-IPv4-Netz nach einem beliebigen der Ansprüche 1-23.

## Revendications

1. Procédé d'optimisation de route entre un noeud mobile double, MN (126), capable de fonctionner à la fois en version Internet Protocol IPv4 et IPv6, un noeud correspondant, CN (118), et un agent de rattachement, HA, (112) du MN, quand le MN (126) se trouve dans un réseau IPv4 uniquement,
le procédé étant **caractérisé par** :
l'échange d'adresses IPv4 par le biais du HA (112) ; et
la communication directe entre le MN (126) et le CN (118) sans le HA (112), au moyen d'un tunnel IPv6 en IPv4,
dans lequel l'échange des adresses IPv4 comporte le tunnelage par le MN (126) de l'adresse IPv4 du MN vers le CN (118) à travers le HA (112) et la demande par le MN (126) de l'adresse IPv4 du CN.

2. Procédé selon la revendication 1, dans lequel le procédé comprend en outre
l'actualisation d'un agent de rattachement (HA) (112) avec une adresse IPv4 du MN et le désenregistrement d'une Actualisation liante, BU, antérieure avec un noeud correspondant (CN) (118) par l'intermédiaire du HA.

3. Procédé selon la revendication 1 ou 2, dans lequel la communication directe entre le MN et le CN sans le HA comprend
la vérification de la joignabilité du CN par l'adresse IPv4 du CN en utilisant un tunnel IPv6 en IPv4 ; et
l'envoi et la réception d'un paquet de données IPv6 vers/depuis le MN et le CN en utilisant le tunnel IPv6 en IPv4.

4. Procédé selon l'une quelconque des revendications 2 ou 3, dans lequel l'actualisation du HA comprend l'envoi par le MN d'un paquet BU au HA, encapsulé dans un en-tête IPv4.

5. Procédé selon la revendication 4, dans lequel le paquet BU a l'adresse IPv4 visitée globale du MN comme source externe, l'adresse IPv4 du HA comme destination externe, et un BU normal comme paquet interne.

6. Procédé selon la revendication 4 ou la revendication 5, dans lequel à la réception du paquet BU, le HA supprime un cache liant, s'il existe, pour le MN et stocke les paramètres de tunnelage requis.

7. Procédé selon l'une quelconque des revendications 4 à 6, dans lequel le HA tunnelise le paquet BU vers et depuis le CN vers le MN dans un paquet IPv4 et le MN tunnelise tous les paquets destinés au CN en utilisant l'adresse IPv4 du HA.

8. Procédé selon l'une quelconque des revendications 2 à 7, dans lequel le désenregistrement du BU antérieur avec le CN par l'intermédiaire du HA comprend le désenregistrement par le MN du BU antérieur avec le CN en envoyant un BU normal au CN encapsulé dans un paquet IPv4 par l'intermédiaire du HA.

9. Procédé selon la revendication 8, dans lequel le paquet IPv4 a l'adresse globale v4 visitée du MN comme adresse de source externe, l'adresse IPv4 du HA comme adresse de destination externe, l'Adresse de Rattachement (HoA) IPv6 du MN comme adresse de source interne, l'adresse IPv6 du CN comme adresse de destination interne, et un BU.

10. Procédé selon la revendication 8 ou la revendication 9, dans lequel à la réception du paquet IPv4, le CN retire un cache liant de celui-ci pour le MN et commence à communiquer avec le MN en utilisant l'Adresse de Rattachement (HoA) du MN.

11. Procédé selon la revendication 1, dans lequel le CN stocke l'adresse IPv4 du MN qui doit être utilisée pour le tunnelage des paquets de données.

12. Procédé selon la revendication 1 ou la revendication 11, dans lequel le CN répond avec l'adresse IPv4 du CN si le CN a une double capabilité ou a une adresse de routeur qui est double et liée au CN.

13. Procédé selon la revendication 3, dans lequel la vérification de la joignabilité du CN comprend l'envoi par le MN d'un paquet v6 en v4 direct destiné au CN.

14. Procédé selon la revendication 13, dans lequel en réponse à la réception du paquet, le CN envoie directement au MN un paquet de réponse.

15. Procédé selon la revendication 3, dans lequel l'envoi et la réception du paquet de données IPv6 comprend le début de l'envoi au CN par le MN d'un paquet de données IPv6 tunnélisé dans le paquet IPv4 une fois que la joignabilité a été vérifiée.

16. Procédé selon la revendication 15, dans lequel, en retour, le CN envoie directement à l'adresse IPv4 du MN un paquet de données IPv6 tunnélisé dans un paquet IPv4.

17. Procédé selon la revendication 1, dans lequel le procédé comprend en outre
l'obtention d'une adresse IPv4 du MN et l'enregistrement de l'adresse IPv4 du MN dans un agent de rattachement (HA) ;
la réception d'une adresse IPv4 du CN depuis le CN ; et
la vérification de la joignabilité du CN par tunnelage IPv4 qui encapsule un paquet IPv6 dans un en-tête qui utilise les adresses IPv4 du MN et du CN.

18. Procédé selon la revendication 17, dans lequel l'enregistrement de l'adresse IPv4 du MN dans le HA est exécuté au moyen d'une actualisation liante.

19. Procédé selon la revendication 17 ou la revendication 18, dans lequel le tunnelage par le MN de l'adresse IPv4 du MN vers le CN par le biais du HA comprend l'envoi d'un paquet de tunnelage IPv4, lequel a une adresse IPv4 globale visitée du MN comme adresse de source externe, une adresse IPv4 du HA comme adresse de destination externe, une adresse de rattachement IPv6 du MN comme adresse de source interne, une adresse IPv6 du CN comme adresse de destination interne, et l'adresse IPv4 du MN, au HA.

20. Procédé selon l'une quelconque des revendications 17 à 19, dans lequel la réception de l'adresse IPv4 du CN depuis le CN est exécutée en utilisant le HA.

21. Procédé selon l'une quelconque des revendications 17 à 20, dans lequel la réception de l'adresse IPv4 du CN depuis le CN comprend la réception d'une adresse IPv4 d'un routeur connecté au CN au lieu de l'adresse IPv4 du CN, quand le CN ne supporte pas le tunnelage IPv4.

22. Procédé selon l'une quelconque des revendications 17 à 21, dans lequel la vérification de la joignabilité du CN comprend l'envoi d'un paquet, lequel a une adresse IPv4 globale visitée du MN comme adresse de source externe, l'adresse IPv4 du CN comme adresse de destination externe, une adresse de rattachement IPv6 du MN comme adresse de source interne, une adresse IPv6 du CN comme adresse de destination interne, et une valeur montrant que le paquet est un message de vérification de joignabilité vers un en-tête de mobilité, au CN.

23. Procédé selon la revendication 22, dans lequel la vérification de la joignabilité du CN comprend en outre la réception d'un paquet de message, lequel a l'adresse IPv4 du CN comme adresse de source externe, une adresse IPv4 globale visitée du MN comme adresse de destination externe, une adresse IPv6 du CN comme adresse de source interne, une adresse de rattachement IPv6 du MN comme adresse de destination interne, et une valeur montrant que le paquet de message est un message d'information de joignabilité vers un en-tête de mobilité, depuis le CN.

24. Support lisible par ordinateur sur lequel est enregistré un programme destiné à un ordinateur pour exécuter un procédé d'optimisation de route quand le programme est exécuté au niveau d'un double noeud MIPV6 (MN) dans un réseau IPV4 uniquement selon l'une quelconque des revendications 1 à 23.
